# EUROPEAN PATENT SPECIFICATION

(11) **EP 4 247 013 B1**
(45) Date of publication and mention of the grant of the patent: **23.04.2025**
(21) Application number: 20963097.9
(22) Date of filing: 30.11.2020
(51) Int. Cl.: H04W 4/02, G01S 5/02, H04W 64/00, H04W 88/14, H04W 88/18

(54) **POSITIONING METHOD, COMMUNICATION APPARATUS AND COMMUNICATION SYSTEM**
POSITIONIERUNGSVERFAHREN, KOMMUNIKATIONSVORRICHTUNG UND KOMMUNIKATIONSSYSTEM
PROCÉDÉ DE POSITIONNEMENT, APPAREIL DE COMMUNICATION ET SYSTÈME DE COMMUNICATION

(43) Date of publication of application: 20.09.2023
(73) Proprietor: Huawei Technologies Co., Ltd., Shenzhen, Guangdong 518129 (CN)
(72) Inventor: ZHOU, Runze, Shenzhen, Guangdong 518129 (CN); YANG, Mingyue, Shenzhen, Guangdong 518129 (CN); CHEN, Zhongping, Shenzhen, Guangdong 518129 (CN)
(74) Representative: Epping - Hermann - Fischer
(86) International application number: PCT/CN2020/132925
(87) International publication number: WO 2022/110209

(56) References cited:
- EP-A1- 3 701 754
- EP-B1- 3 701 754
- WO-A1-2020/055749
- CN-A- 110 999 330
- CN-A- 111 970 635
- US-A1- 2019 037 338
- US-A1- 2020 084 569
- HUAWEI, HISILICON: "Solution for positioning via user plane", 3GPP DRAFT; S2-183668(WAS 2127) SOLUTION FOR POSITIONING VIA USER PLANE_V1.1, vol. SA WG2, 10 April 2018 (2018-04-10), Sanya, China, pages 1 - 4, XP051437969

## Description

### TECHNICAL FIELD

This application relates to the field of communication technologies, and in particular, to a positioning method, a communication apparatus, and a communication system.

### BACKGROUND

In a wireless network, a terminal device may move with movement of a user. Therefore, a network side needs to obtain a location of the terminal device in real time or irregularly, to perform a service related to the terminal device.

Currently, in some latency-sensitive services, a latency requirement is high. Therefore, the location of the terminal device also needs to be quickly located.

How to quickly locate the location of the terminal device is an urgent problem to be currently resolved.

US 2019/037338 A1 discloses techniques directed to increasing a quantity of location-related information broadcast by wireless nodes. A user equipment (UE) sends a request to a wireless node for broadcast of an increased quantity of location-related information for a wireless access type and the wireless node broadcasts the increased quantity of location-related information using the wireless access type. The wireless node may transfer the request to other wireless nodes which may similarly broadcast the increased quantity of location-related information using the wireless access type. The UE may receive the increased quantity of location-related information using the wireless access type and may then obtain location information such as a location estimate for the UE.

EP 3701754 A1 discloses uplink high efficiency transport of location information from a user equipment (UE) including initiating a periodic or triggered location session in a UE by a location server (LS) in a wireless network. The UE enters an idle state and monitors for a triggering event. After detecting an event, the UE may obtain location information, determine a nearby base station, and obtain a temporary signaling channel from the base station. The UE transmits the location information to the base station and includes a UE identification (ID), an ID for the LS, and an authentication code (AC). The base station transfers the received information to the LS which may authenticate the UE ID using the AC, determine the UE location using the location information and transfer the UE location to an external client.

US 2020/084569 A1 discloses methods and techniques for enhancing positioning related protocols in order to indicate when one location session is different from another location session. One or more messages provided in a location session by a location server to a user equipment (UE) include a session indication, such as a session identifier (ID), where a different session ID is provided for each location session.

### SUMMARY

The invention is defined in the claims. In the following, parts of the description and drawings referring to embodiments which are not covered by the claims are not presented as embodiments of the invention, but as examples useful for understanding the invention.

This application provides a positioning method, a communication apparatus, and a communication system, to quickly locate a location of a terminal device.

### BRIEF DESCRIPTION OF DRAWINGS

FIG. 1 is a schematic diagram of a 5G network architecture;
FIG. 2 is a schematic diagram of a positioning method according to an embodiment of this application;
FIG. 3 is a schematic diagram of a positioning method according to an embodiment of this application;
FIG. 4 is a schematic diagram of a positioning method according to an embodiment of this application;
FIG. 5 is a schematic diagram of a positioning method according to an embodiment of this application;
FIG. 6 is a schematic diagram of a communication apparatus according to an embodiment of this application;
FIG. 7 is a schematic diagram of a communication apparatus according to an embodiment of this application; and
FIG. 8 is a schematic diagram of a terminal device according to an embodiment of this application.

### DESCRIPTION OF EMBODIMENTS

A location based service (location based service, LBS) is to use various types of positioning technologies to obtain a current location of a terminal device, and then provide an information resource and a basic service for the terminal device through the mobile internet. In the LBS, a plurality of information technologies such as mobile communication, the internet, spatial positioning, location information, and big data are integrated. A mobile internet service platform is used to update and interact data, so that a user can obtain a corresponding service through the spatial positioning.

Currently, there are a plurality of positioning methods, including but not limited to: global positioning system (global positioning system, GPS) positioning, access network device positioning, wireless fidelity (wireless fidelity, Wi-Fi) assisted positioning, assisted global positioning system (assisted global positioning system, A-GPS) positioning, BeiDou positioning, and the like.

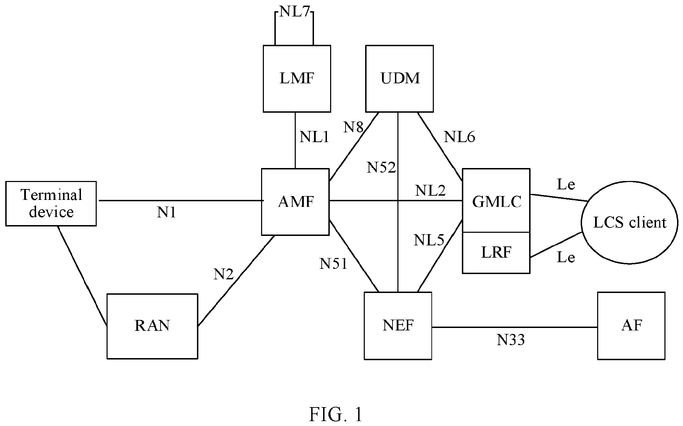

For the access network device positioning, a deployed network architecture, for example, a 4th generation (4th generation, 4G) network or a 5th generation (5th generation, 5G) network needs to be used. For ease of description, an embodiment of this application is described by using a 5G network architecture shown in FIG. 1 as an example. The 5G network architecture includes three parts: a terminal device, an access network device (which is also referred to as a radio access network (radio access network, RAN) device), and a core network (core network).

The terminal device is a device that is configured to implement a wireless communication function, for example, a mobile phone or an internet of things terminal device. The terminal device mainly refers to a positioned object, and is responsible for measuring and collecting positioning-related data.

In addition to implementing a function related to wireless access, the access network device further collects positioning data (for example, location information of the terminal device), and reports the positioning data to the core network. The core network determines a location of the terminal device based on the positioning data. The access network device includes but is not limited to a next generation NodeB (gNodeB, gNB), an evolved NodeB (evolved NodeB, eNB), and the like.

A positioning-related network element in the core network includes an access and mobility management function (access and mobility management function, AMF) network element, a location management function (location management function, LMF) network element, a network exposure function (network exposure function, NEF) network element, a gateway mobile location center (gateway mobile location center, GMLC) network element, a unified data management (unified data management, UDM) network element, and an application function (application function, AF) network element.

The AMF network element is mainly responsible for mobility management in a mobile network, such as user location update, a user registration network, user switching, and the like.

The UDM network element is configured to store user data such as subscription information and authentication/authorization information.

The LMF network element is mainly responsible for performing positioning request management, positioning resource allocation, and determining the location of the terminal device in a positioning service.

The GMLC network element is mainly responsible for positioning request processing in the positioning service, and selecting an appropriate AMF network element for the positioning service.

The AF network element may be configured to initiate the positioning service to the core network, and obtain the location of the terminal device from the core network.

A session management network element, a mobility management network element, a location management network element, and an application function network element in embodiments of this application may respectively be an SMF, an AMF, an LMF, and an AF in FIG. 1, or may be network elements that have functions of the SMF, the AMF, the LMF, and the AF in a future communication network such as a 6th generation (6th generation, 6G) network. This is not limited in this application. For ease of description, in this application, an example in which the session management network element, the mobility management network element, the location management network element, and the application function network element are respectively the SMF, the AMF, the LMF, and the AF is used for description.

To quickly locate a location of a terminal device, an embodiment of this application provides a positioning method. A method not forming part of the present invention implements positioning based on message exchange on a control plane. An LMF interacts with an access network device by using an AMF, and obtains information used for positioning (for example, location information of a terminal device) from the access network device, so that the LMF determines a location of the terminal device based on the obtained information used for positioning. In this method, a message between the access network device and the LMF needs to be forwarded by the AMF. The AMF is a control plane network element, and is usually deployed far away from the LMF. Consequently, a message receiving and sending path between the access network device and the LMF is long, and finally, long time needs to be consumed to complete positioning of the terminal device once.

Therefore, an embodiment of this application further provides a positioning method. In this method, positioning of a terminal device is implemented through a user plane.

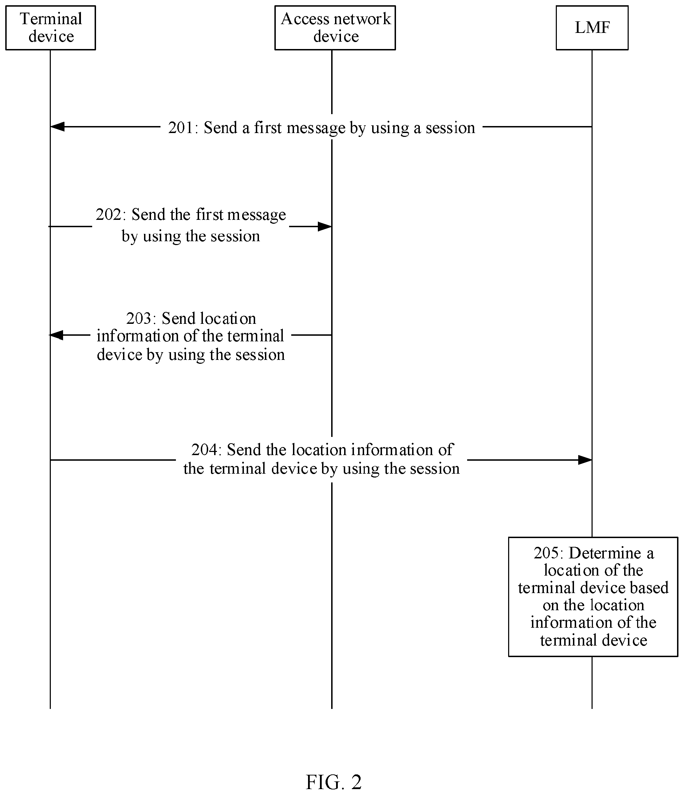

FIG. 2 is a schematic diagram of a positioning method according to an embodiment of this application. The method includes the following steps.

Step 201: An LMF sends a first message to a terminal device by using a session. Correspondingly, the terminal device receives the first message by using the session.

The first message is used to request location information of the terminal device. The first message is, for example, a positioning message (positioning message).

The session is used to provide data connectivity between the terminal device and a data network (DN). Uplink and downlink data of the terminal device needs to be carried by using the session. The session may be, for example, a protocol data unit (protocol data unit, PDU) session, and a PDU type may be an inter-network internet protocol (internet protocol, IP), an Ethernet (Ethernet), or an unstructured type.

It should be noted that the first message may alternatively be replaced with a container (container), and the container includes information used to request the location information of the terminal device.

Step 202: The terminal device sends the first message to an access network device by using the session. Correspondingly, the access network device receives the first message by using the session.

Optionally, a positioning protocol between the LMF and the access network device is used for the first message. Optionally, the positioning protocol is the new radio positioning protocol A (New Radio Positioning Protocol A, NRPPa). Optionally, when the positioning protocol is NRPPa, the first message may be replaced with an NRPPa container. When the positioning protocol between the LMF and the access network device is used for the first message, after the terminal device receives the first message from the LMF, the terminal device does not parse the first message, but transparently transmits the first message to the access network device. This can improve communication security and reduce overheads of the terminal device.

Optionally, in the step 201, the LMF may send a second message to the terminal device by using the session, where the second message carries the first message. A positioning protocol between the LMF and the terminal device, for example, a long term evolution (long term evolution, LTE) positioning protocol (LTE positioning protocol, LPP), is used for the second message. The positioning protocol between the LMF and the access network device, for example, NRPPa, is used for the first message.

Step 203: The access network device sends the location information of the terminal device to the terminal device based on the first message by using the session. Correspondingly, the terminal device receives the location information of the terminal device.

The location information of the terminal device is used to calculate a location of the terminal device.

Optionally, the access network device determines the location information of the terminal device. The location information is, for example, location information, and the location information may include a positioning reference signal (positioning reference signal, PRS) and/or a sounding reference signal (sounding reference signal, SRS).

Optionally, the first message includes a correlation identifier of the terminal device and information indicating the positioning method. Optionally, the correlation identifier of the terminal device is used to associate the terminal device. The positioning method includes: The access network device measures a radio signal sent by the terminal device, and reports the location information of the terminal device to the LMF. For example, refer to descriptions in section 9.1.1.1 in 3GPP TS 38.455. The correlation identifier of the terminal device that is included in the first message may be reflected by using an LMF UE measurement ID, and the information that is included in the first message and that indicates the positioning method may be reflected by using a Measurement Quantities Item. The Measurement Quantities Item may include one or more of a Cell-ID, an angle of arrival (Angle of Arrival, AOA), a timing advance type 1 (Timing Advance Type 1), a timing advance type 2 (Timing Advance Type 2), reference signal received power (reference signal received power, RSRP), and reference signal received quality (reference signal received quality, RSRQ).

Optionally, the access network device sends a measurement request to the terminal device based on the first message, where the measurement request indicates the terminal device to send the radio signal used by the access network device for measurement, and the terminal device sends the radio signal to the access network device based on the measurement request. The access network device measures the radio signal to obtain the location information of the terminal device. Optionally, the measurement request carries at least one of a frequency at which the radio signal is sent, a time point at which the radio signal is sent, and a time interval at which the radio signal is sent.

Step 204: The terminal device sends the location information of the terminal device to the LMF by using the session. Correspondingly, the LMF receives the location information of the terminal device.

Step 205: The LMF determines the location of the terminal device based on the location information of the terminal device.

The location of the terminal device may be, for example, longitude and latitude, or a coordinate point.

In an implementation, there are two different qualities of service (quality of service, QoS) flows in the session. For example, there is a first QoS flow in a downlink direction, and there is a second QoS flow in an uplink direction. Optionally, in the foregoing solution, the LMF sends the first message to the terminal device by using the first QoS flow, and the terminal device sends the first message to the access network device by using the second QoS flow. Then the access network device sends the location information of the terminal device to the terminal device by using the first QoS flow, and the terminal device sends the location information of the terminal device to the LMF by using the second QoS flow. Based on the foregoing solution, the LMF sends, to the access network device through the terminal device by using the session, the first message (which may also be referred to as positioning signaling) used to request the location information of the terminal device. The access network device feeds back the location information of the terminal device to the LMF through the terminal device by using the session based on the first message, so that the LMF can determine the location of the terminal device. In other words, in this method, the positioning signaling used for positioning and the location information of the terminal device are transmitted through a user plane. Because the user plane has a short path and a low transmission latency, the positioning signaling used for positioning and the location information of the terminal device can be quickly transmitted, and a latency in locating the location of the terminal device can be further reduced, so that the location of the terminal device is quickly located.

In addition, in comparison with the foregoing method for transmitting the positioning signaling used for positioning and the location information of the terminal device based on the control plane, that the positioning signaling used for positioning and the location information of the terminal device that are between the access network device and the LMF are detoured by using the AMF on the control plane can be avoided. Therefore, a transmission latency can be reduced, and the latency in locating the location of the terminal device can be further reduced, so that the location of the terminal device is quickly located.

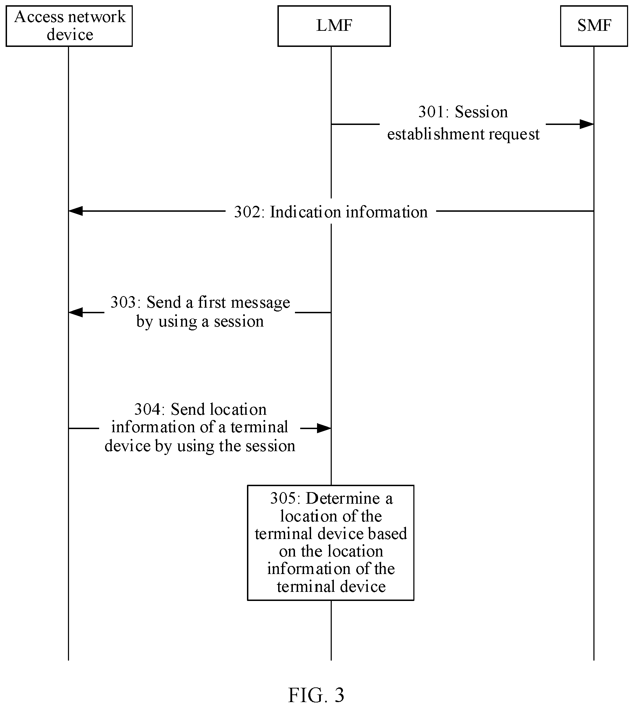

FIG. 3 is a schematic diagram of a positioning method according to an embodiment of this application. The method includes the following steps.

Step 301: An LMF sends a session create request to an SMF. Correspondingly, the SMF receives the session create request. The session create request is used to request to establish a session used to transmit location information of a terminal device.

Step 302: The SMF sends indication information to an access network device. Correspondingly, the access network device receives the indication information.

After receiving the session create request, the SMF establishes the session, and sends the indication information to the access network device in a process of establishing the session. Optionally, location information of the LMF is further sent to the terminal device.

The indication information indicates that the established session is related to a positioning service. The session that the LMF requests the SMF to create is used to transmit the location information of the terminal device, in other words, the session is related to the positioning service. Therefore, the SMF sends the indication information to the access network device based on the session establishment request, to indicate that the session is related to the positioning service.

Step 303: The LMF sends a first message to the access network device by using the session. Correspondingly, the access network device receives the first message by using the session.

The first message is used to request the location information of the terminal device. The first message is, for example, a positioning message (positioning message).

The session is used to provide data connectivity between the terminal device and a data network (DN). Uplink and downlink data of the terminal device needs to be carried by using the session. The session may be, for example, a protocol data unit (PDU) session, and a PDU type may be an inter-network internet protocol (IP), an Ethernet (Ethernet), or an unstructured type.

It should be noted that the first message may alternatively be replaced with a container (container), and the container includes information used to request the location information of the terminal device.

Optionally, a positioning protocol between the LMF and the access network device is used for the first message. Optionally, the positioning protocol is NRPPa. Optionally, when the positioning protocol is NRPPa, the first message is replaced with an NRPPa container.

The access network device receives the indication information, and determines that the session is related to the positioning service. Therefore, the access network device may receive the first message based on the indication information, and parse the first message. In other words, the access network device intercepts the first message based on the indication information, determines to directly parse the first message, and determines the location information of the terminal device based on the first message.

Step 304: The access network device sends the location information of the terminal device to the LMF based on the first message by using the session. Correspondingly, the LMF receives the location information of the terminal device.

The location information of the terminal device is used to calculate a location of the terminal device.

Optionally, the access network device determines the location information of the terminal device. The location information is, for example, location information, and the location information may include a positioning reference signal (PRS) and/or a sounding reference signal (SRS).

Optionally, the first message includes a correlation identifier of the terminal device and information indicating the positioning method. Optionally, the correlation identifier of the terminal device is used to associate the terminal device. The positioning method includes: The access network device measures a radio signal sent by the terminal device, and reports the location information of the terminal device to the LMF. For example, refer to descriptions in section 9.1.1.1 in 3GPP TS 38.455. The correlation identifier of the terminal device that is included in the first message may be reflected by using an LMF UE measurement ID, and the information that is included in the first message and that indicates the positioning method may be reflected by using a Measurement Quantities Item. The Measurement Quantities Item may include one or more of a Cell-ID, an angle of arrival (Angle of Arrival, AOA), a timing advance type 1 (Timing Advance Type 1), a timing advance type 2 (Timing Advance Type 2), reference signal received power (RSRP), and reference signal received quality (RSRQ).

Optionally, the access network device sends a measurement request to the terminal device based on the first message, where the measurement request indicates the terminal device to send the radio signal used by the access network device for measurement, and the terminal device sends the radio signal to the access network device based on the measurement request. The access network device measures the radio signal to obtain the location information of the terminal device. Optionally, the measurement request carries at least one of a frequency at which the radio signal is sent, a time point at which the radio signal is sent, and a time interval at which the radio signal is sent.

Step 305: The LMF determines the location of the terminal device based on the location information of the terminal device.

The location of the terminal device may be, for example, longitude and latitude, or a coordinate point.

In an implementation, there are two different QoS flows in the session. For example, there is a first QoS flow in a downlink direction, and there is a second QoS flow in an uplink direction. Optionally, in the foregoing solution, the LMF sends the first message to the terminal device by using the first QoS flow, and the terminal device sends the first message to the access network device by using the second QoS flow. Then the access network device sends the location information of the terminal device to the terminal device by using the first QoS flow, and the terminal device sends the location information of the terminal device to the LMF by using the second QoS flow.

Based on the foregoing solution, the LMF sends, to the access network device by using the session, the first message (which may also be referred to as positioning signaling) used to request the location information of the terminal device, and the access network device feeds back the location information of the terminal device to the LMF based on the first message by using the session, so that the LMF can determine the location of the terminal device. In other words, in this method, the positioning signaling used for positioning and the location information of the terminal device are transmitted through a user plane. Because the user plane has a short path and a low transmission latency, the positioning signaling used for positioning and the location information of the terminal device can be quickly transmitted, and a latency in locating the location of the terminal device can be further reduced, so that the location of the terminal device is quickly located.

In addition, in comparison with the foregoing method for transmitting the positioning signaling used for positioning and the location information of the terminal device based on the control plane, that the positioning signaling used for positioning and the location information of the terminal device that are between the access network device and the LMF are detoured by using the AMF on the control plane can be avoided. Therefore, a transmission latency can be reduced, and the latency in locating the location of the terminal device can be further reduced, so that the location of the terminal device is quickly located.

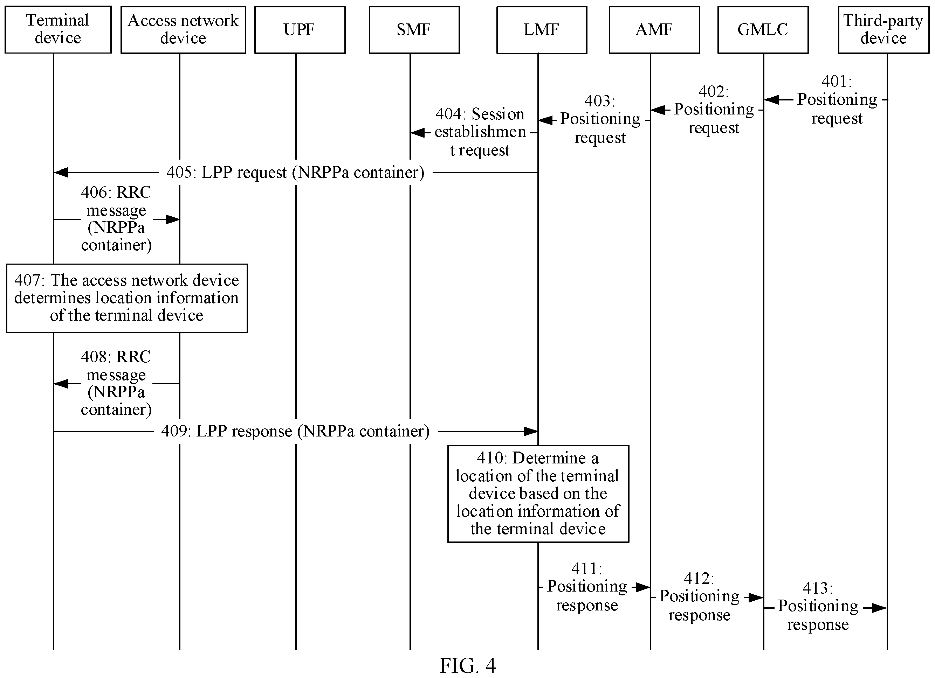

The following specifically describes the positioning method corresponding to FIG. 2 with reference to a specific example. The following embodiment corresponding to FIG. 4 is a specific example of the embodiment corresponding to FIG. 2. FIG. 4 is a schematic diagram of a positioning method according to an embodiment of this application. The method includes the following steps.

Step 401: A third-party device sends a positioning request to a GMLC. Correspondingly, the GMLC receives the positioning request.

The positioning request carries information about a terminal device. The information about the terminal device may be, for example, an identifier of the terminal device or an address of the terminal device. The identifier of the terminal device is used to uniquely identify the terminal device. Refer to FIG. 1. In an implementation, the third-party device may be a location service client (Location Service Client, LCS Client), and the LCS client may send the positioning request to the GMLC through a Le interface between the GMLC and the LCS client. In another implementation, the third-party device may be an AF, and the AF may send the positioning request to the GMLC through an NEF.

Optionally, the GMLC may authenticate the third-party device, to determine whether the third-party device has a permission to obtain positioning information of the terminal device. If the authentication succeeds, the third-party device has the permission to obtain the positioning information of the terminal device.

Step 402: The GMLC sends the positioning request to an AMF. Correspondingly, the AMF receives the positioning request. The positioning request carries the information about the terminal device. The information about the terminal device may be, for example, an identifier of the terminal device or an address of the terminal device.

Step 403: The AMF sends the positioning request to an LMF. Correspondingly, the LMF receives the positioning request. The positioning request carries the information about the terminal device. The information about the terminal device may be, for example, an identifier of the terminal device or an address of the terminal device.

The positioning request further carries indication information, and the indication information indicates to use a user plane positioning method to determine the positioning information of the terminal device.

Step 404: The LMF sends a session establishment request to an SMF. Correspondingly, the SMF receives the session establishment request.

The session establishment request is used to request the SMF to establish a session (which is alternatively referred to as a user plane connection) between the terminal device and the LMF. Nodes on the session include the terminal device, an access network device, a UPF, and the LMF.

In a process in which the SMF establishes the user plane connection, the SMF further notifies the terminal device of identification information of the LMF. The identification information of the LMF may be, for example, an identifier or an address of a location management network element.

Step 405: The LMF sends an LPP request to the terminal device by using the session. Correspondingly, the terminal device receives the LPP request.

The session is used to provide data connectivity between the terminal device and a data network (DN). Uplink and downlink data of the terminal device needs to be carried by using the session. The session may be, for example, a protocol data unit (PDU) session, and a PDU type may be an inter-network internet protocol (IP), an Ethernet (Ethernet), or an unstructured type.

An LPP is a communication protocol between the LMF and the terminal device, and is used to transfer positioning-related information.

The LPP request is sent by the LMF to the terminal device by using the session between the LMF and the terminal device. Specifically, the LMF sends the LPP request to the terminal device by using the UPF and the access network device.

The LPP request carries an NRPPa container, the NRPPa container carries a correlation identifier of the terminal device and indication information, the correlation identifier of the terminal device is used to associate the terminal device, and the indication information indicates the positioning method. Optionally, the positioning method includes: The access network device measures a radio signal sent by the terminal device, and reports location information of the terminal device to the LMF. The NRPPa container is a specific example of the first message in the embodiment corresponding to FIG. 2. NRPPa is a communication protocol between the access network device and the LMF, and is used to transfer the positioning-related information.

Step 406: The terminal device sends a radio resource control (Radio Resource Control, RRC) message to the access network device by using the session. Correspondingly, the access network device receives the RRC message by using the session.

The RRC message carries the NRPPa container.

Step 407: The access network device determines the location information of the terminal device.

For a method for determining the location information of the terminal device by the access network device, refer to the descriptions in the foregoing embodiment. Details are not described again. The location information is, for example, location information, and the location information may include a positioning reference signal (PRS) and/or a sounding reference signal (SRS).

Step 408: The access network device sends the RRC message to the terminal device by using the session. Correspondingly, the terminal device receives the RRC message by using the session.

The RRC message carries the NRPPa container, and the NRPPa container carries the location information of the terminal device.

Step 409: The terminal device sends an LPP response to the LMF by using the session. Correspondingly, the LMF receives the LPP response by using the session.

The LPP response carries the NRPPa container in step 408.

The LPP response is sent by the terminal device to the LMF by using the foregoing session.

Step 410: The LMF determines a location of the terminal device based on the location information of the terminal device. Step 411: The LMF sends a positioning response to the AMF. Correspondingly, the AMF receives the positioning response. The positioning response carries the location of the terminal device.

Step 412: The AMF sends the positioning response to the GMLC. Correspondingly, the GMLC receives the positioning response.

The positioning response carries the location of the terminal device.

Step 413: The GMLC sends the positioning response to the third-party device. Correspondingly, the third-party device receives the positioning response.

The positioning response carries the location of the terminal device.

Based on the foregoing solution, the LMF sends, to the access network device through the terminal device by using a session, the NRPPa container (which may also be referred to as positioning signaling) used to request the location information of the terminal device. The access network device feeds back the location information of the terminal device to the LMF through the terminal device by using the session based on the NRPPa container, so that the LMF can determine the location of the terminal device. In other words, the method is to transmit the positioning signaling used for positioning and the location information of the terminal device through a user plane. Because the user plane has a short path and a low transmission latency, the positioning signaling used for positioning and the location information of the terminal device can be quickly transmitted, and a latency in locating the location of the terminal device can be further reduced, so that the location of the terminal device is quickly located.

In addition, in comparison with the foregoing method for transmitting the positioning signaling used for positioning and the location information of the terminal device based on the control plane, that the positioning signaling used for positioning and the location information of the terminal device that are between the access network device and the LMF are detoured by using the AMF on the control plane can be avoided. Therefore, a transmission latency can be reduced, and the latency in locating the location of the terminal device can be further reduced, so that the location of the terminal device is quickly located.

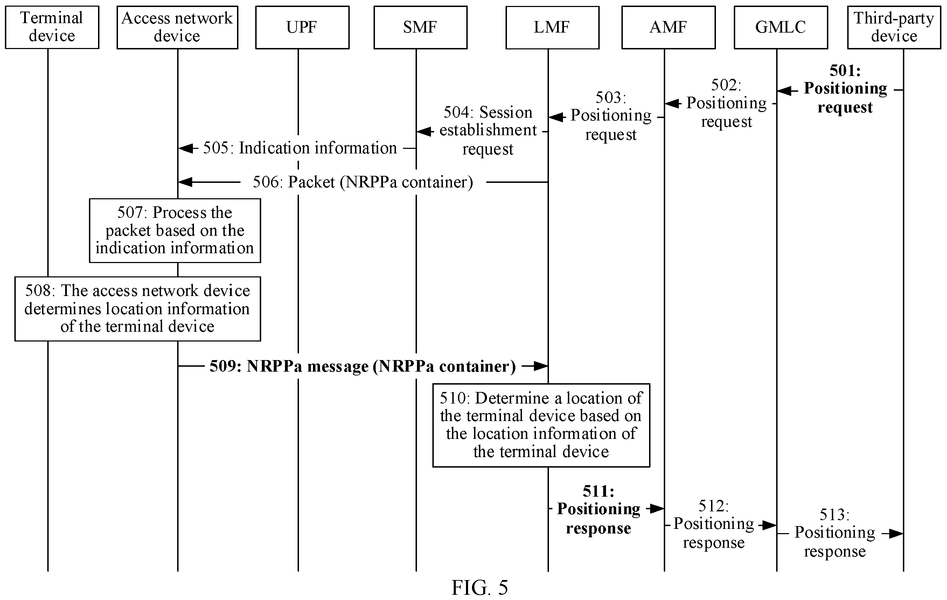

The following specifically describes the positioning method corresponding to FIG. 3 with reference to a specific example. The following embodiment corresponding to FIG. 5 is a specific example of the embodiment corresponding to FIG. 3. FIG. 5 is a schematic diagram of a positioning method according to an embodiment of this application. The method includes the following steps.

The method includes the following steps.

Step 501 to step 503 are the same as step 401 to step 403. Refer to the foregoing descriptions.

Step 504: The LMF sends a session establishment request to an SMF. Correspondingly, the SMF receives the session establishment request.

The session create request is used to request to establish a session used to transmit location information of the terminal device. Optionally, the session establishment request carries indication information, and the indication information indicates an NRPPa layer of an access network device to process a packet of the session.

The session is used to provide data connectivity between the terminal device and a data network (DN). Uplink and downlink data of the terminal device needs to be carried by using the session. The session may be, for example, a protocol data unit (PDU) session, and a PDU type may be an inter-network internet protocol (IP), an Ethernet (Ethernet), or an unstructured type. In an alternative implementation, step 504 may alternatively be replaced with the following step 504'. Step 504': The LMF sends a session modification request to the SMF. Correspondingly, the SMF receives the session modification request.

The session modification request is used to request the SMF to update a session between the terminal device and the LMF, and the session is used to transmit the location information of the terminal device. Optionally, the session modification request carries the indication information, and the indication information indicates the NRPPa layer of the access network device to process a packet of the session.

Step 505: The SMF sends the indication information to the access network device. Correspondingly, the access network device receives the indication information.

The indication information indicates that the established session is related to a positioning service. The session that the LMF requests the SMF to create or update is used to transmit the location information of the terminal device, in other words, the session is related to the positioning service. Therefore, the SMF sends the indication information to the access network device based on the session establishment request or the session modification request, to indicate that the session is related to the positioning service.

Step 506: The LMF sends the packet to the access network device by using the session. Correspondingly, the access network device receives the packet by using the session.

Optionally, the packet carries an NRPPa container, and the NRPPa container carries a correlation identifier of the terminal device and information indicating the positioning method. Optionally, the correlation identifier of the terminal device is used to associate the terminal device. The positioning method includes: The access network device measures a radio signal sent by the terminal device, and reports the location information of the terminal device to the LMF. Optionally, the NRPPa container uses the positioning protocol NRPPa between the LMF and the access network device.

The packet is sent by the LMF to the access network device by using a UPF. In an implementation, the LMF obtains a tunnel endpoint identifier (Tunnel Endpoint Identifier, TEID) between the LMF and the UPF, encapsulates the NRPPa container in a general packet radio service (General packet radio service, GPRS) tunneling protocol (GPRS Tunneling Protocol, GTP) packet, and sends the GTP packet to the access network device through a GTP tunnel corresponding to the TEID.

Step 507: The access network device processes the packet based on the indication information.

After receiving the indication information from the SMF, the access network device determines that the session is related to the positioning service. Therefore, the access network device may receive and parse the packet based on the indication information. In other words, the access network device determines, based on the indication information, to directly parse the packet, and determines the location information of the terminal device based on the packet.

For example, the access network device parses the packet, obtains the NRPPa container in the packet, and obtains, from the NRPPa container, the correlation identifier of the terminal device and the information indicating the positioning method.

Step 508: The access network device determines the location information of the terminal device.

For a method for determining the location information of the terminal device by the access network device, refer to the descriptions in the foregoing embodiment. Details are not described again. The location information is, for example, location information, and the location information may include a positioning reference signal (PRS) and/or a sounding reference signal (SRS).

Step 509: The access network device sends an NRPPa message to the LMF by using the session. Correspondingly, the LMF receives the NRPPa message by using the session.

The NRPPa message carries the NRPPa container, and the NRPPa container carries the location information of the terminal device.

The NRPPa message is sent by the access network device to the LMF by using the UPF.

Step 510 to step 513 are the same as step 410 to step 413.

Based on the foregoing solution, the LMF sends, to the access network device by using the session, the NRPPa container (which may also be referred to as positioning signaling) used to request the location information of the terminal device. The access network device feeds back the location information of the terminal device to the LMF based on the NRPPa container by using the session, so that the LMF may determine the location of the terminal device. In other words, in this method, the positioning signaling used for positioning and the location information of the terminal device are transmitted through a user plane. Because the user plane has a short path and a low transmission latency, the positioning signaling used for positioning and the location information of the terminal device can be quickly transmitted, and a latency in locating the location of the terminal device can be further reduced, so that the location of the terminal device is quickly located.

In addition, in comparison with the foregoing method for transmitting the positioning signaling used for positioning and the location information of the terminal device based on the control plane, that the positioning signaling used for positioning and the location information of the terminal device that are between the access network device and the LMF are detoured by using the AMF on the control plane can be avoided. Therefore, a transmission latency can be reduced, and the latency in locating the location of the terminal device can be further reduced, so that the location of the terminal device is quickly located.

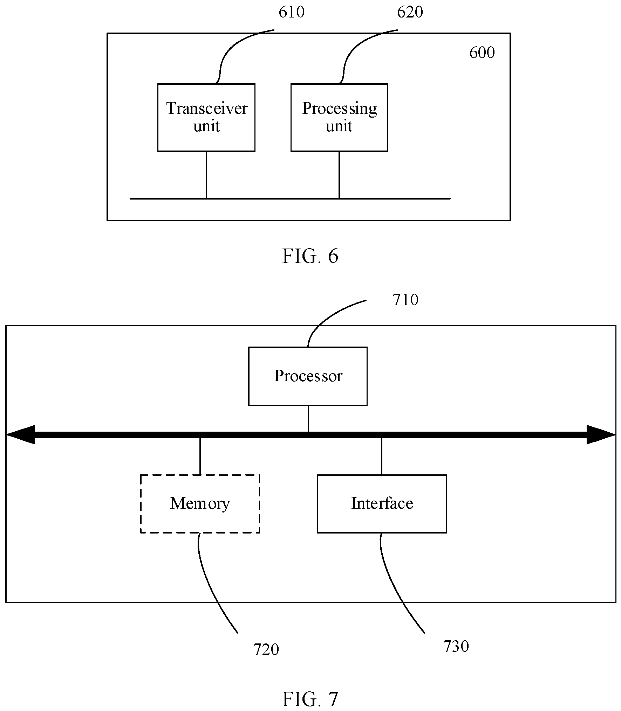

FIG. 6 is a schematic diagram of a communication apparatus according to an embodiment of this application. The communication apparatus is configured to implement steps corresponding to the terminal device, the access network device, the location management network element, or the session management network element in the foregoing embodiments. The communication apparatus 600 includes a transceiver unit 610 and a processing unit 620.

In a first embodiment, the communication apparatus is a terminal device or a chip used in the terminal device.

The processing unit 620 is configured to control the transceiver unit 610 to perform the following operations: receiving a first message from a location management network element by using a session, where the first message is used to request location information of the terminal device; sending the first message to an access network device; receiving the location information from the access network device; and sending the location information of the terminal device to the location management network element by using the session.

In a possible implementation, the location information includes a positioning reference signal and/or a sounding reference signal, and the location information is used to calculate a location of the terminal device.

In a possible implementation, a positioning protocol between the location management network element and the access network device is used for the first message.

In a possible implementation, the positioning protocol is NRPPa.

In a possible implementation, the first message includes a correlation identifier of the terminal device and information indicating a positioning method.

In a possible implementation, the positioning method includes: The access network device measures a radio signal sent by the terminal device, and reports the location information of the terminal device to the location management network element.

In a second embodiment, the communication apparatus is an access network device or a chip used in the access network device.

The transceiver unit 610 is configured to receive a first message from a terminal device by using a session, where the first message is used to request location information of the terminal device. The processing unit 620 is configured to send the location information to the terminal device by using the session based on the first message.

In a possible implementation, the location information includes a positioning reference signal and/or a sounding reference signal, and the location information is used to calculate a location of the terminal device.

In a possible implementation, a positioning protocol between a location management network element and the access network device is used for the first message.

In a possible implementation, the positioning protocol is NRPPa.

In a possible implementation, the first message includes a correlation identifier of the terminal device and information indicating a positioning method.

In a possible implementation, the positioning method includes: The access network device measures a radio signal sent by the terminal device, and reports the location information of the terminal device to the location management network element.

In a possible implementation, the processing unit 620 is specifically configured to:
determine the location information of the terminal device based on the first message; and
send the location information of the terminal device to the location management network element by using the session.

In a third embodiment, the communication apparatus is an access network device or a chip used in the access network device.

The transceiver unit 610 is configured to receive indication information from a session management network element, where the indication information indicates that a session is related to a positioning service. The processing unit 620 is configured to: receive a first message from a location management network element based on the indication information by using the session, where the first message is used to request location information of a terminal device; and send the location information of the terminal device to the location management network element based on the first message by using the session.

In a possible implementation, the location information includes a positioning reference signal and/or a sounding reference signal, and the location information is used to calculate a location of the terminal device.

In a possible implementation, a positioning protocol between the location management network element and the access network device is used for the first message.

In a possible implementation, the positioning protocol is NRPPa.

In a possible implementation, the first message includes a correlation identifier of the terminal device and information indicating a positioning method.

In a possible implementation, the positioning method includes: The access network device measures a radio signal sent by the terminal device, and reports the location information of the terminal device to the location management network element.

In a possible implementation, the processing unit 620 is specifically configured to:
determine the location information of the terminal device based on the first message; and
send the location information of the terminal device to the location management network element by using the session.

In a possible implementation, the processing unit 620 is specifically configured to:
determine, based on the indication information, that the session is related to the positioning service; and
receive the first message from the location management network element by using the session.

In a fourth embodiment, the communication apparatus is a location management network element or a chip used in the location management network element.

The transceiver unit 610 is configured to: send a first message to an access network device by using a session, where the first message is used to request location information of a terminal device; and receive the location information of the terminal device from the access network device by using the session. The processing unit 620 is configured to determine a location of the terminal device based on the location information of the terminal device.

In a possible implementation, the transceiver unit 610 is specifically configured to: send the first message to the access network device through the terminal device by using a session; and receive the location information of the terminal device from the access network device through the terminal device by using the session.

In a possible implementation, the location information includes a positioning reference signal and/or a sounding reference signal, and the location information is used to calculate the location of the terminal device.

In a possible implementation, a positioning protocol between the location management network element and the access network device is used for the first message.

In a possible implementation, the positioning protocol is NRPPa.

In a possible implementation, the first message includes a correlation identifier of the terminal device and information indicating a positioning method.

In a possible implementation, the positioning method includes: The access network device measures a radio signal sent by the terminal device, and reports the location information of the terminal device to the location management network element.

In a fifth embodiment, the communication apparatus is a session management network element or a chip used in the session management network element.

The processing unit 620 is configured to control the transceiver unit 610 to perform the following operations: receiving a session establishment request from a location management network element, where the session establishment request is used to request to establish a session for transmitting location information of a terminal device; and sending indication information to an access network device based on the session establishment request, where the indication information indicates that the session is related to a positioning service.

In a possible implementation, the processing unit 620 is further configured to control the transceiver unit 610 to perform the following operation: sending identification information of the location management network element to the terminal device, where the identification information of the location management network element may be, for example, an identifier or an address of the location management network element.

Optionally, the communication apparatus may further include a storage unit. The storage unit is configured to store data or instructions (which may also be referred to as code or a program). The foregoing units may interact with or be coupled to the storage unit, to implement a corresponding method or function. For example, the processing unit 620 may read the data or the instructions in the storage unit, to enable the communication apparatus to implement the methods in the foregoing embodiments.

It should be understood that division into the units in the communication apparatus is merely logical function division. In an actual implementation, all or a part of the units may be integrated into one physical entity, or may be physically separated. In addition, all the units in the communication apparatus may be implemented in a form of software invoked by a processing element, or may be implemented in a form of hardware, or a part of units may be implemented in a form of software invoked by a processing element, and a part of units may be implemented in a form of hardware. For example, each unit may be a separately disposed processing element, or may be integrated into a chip of the communication apparatus for implementation. In addition, each unit may alternatively be stored in a memory in a form of a program to be invoked by a processing element of the communication apparatus to perform a function of the unit. In addition, all or a part of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, the unit in any one of the foregoing communication apparatuses may be one or more integrated circuits configured to implement the foregoing methods, for example, one or more application-specific integrated circuits (application-specific integrated circuits, ASICs), or one or more microprocessors (digital signal processors, DSPs), or one or more field programmable gate arrays (field programmable gate arrays, FPGAs), or a combination of at least two of these integrated circuit forms. For another example, when the units in the communication apparatus may be implemented in a form of scheduling a program by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SoC).

FIG. 7 is a schematic diagram of a communication apparatus according to an embodiment of this application. The communication apparatus is configured to implement operations of the terminal device, the access network device, the location management network element, or the session management network element in the foregoing embodiments. As shown in FIG. 7, the communication apparatus includes a processor 710 and an interface 730. Optionally, the communication apparatus further includes a memory 720. The interface 730 is configured to communicate with another device.

In the foregoing embodiments, the method performed by the terminal device, the access network device, the location management network element, or the session management network element may be implemented by the processor 710 by invoking a program stored in a memory (which may be the memory 720 in the terminal device, the access network device, the location management network element, or the session management network element, or may be an external memory). To be specific, the terminal device, the access network device, the location management network element, or the session management network element may include the processor 710. The processor 710 invokes the program in the memory to perform the method performed by the terminal device, the access network device, the location management network element, or the session management network element in the foregoing method embodiments. The processor herein may be an integrated circuit having a signal processing capability, for example, a CPU. The terminal device, the access network device, the location management network element, or the session management network element may be implemented by configuring one or more integrated circuits for implementing the foregoing method, for example, one or more ASICs, one or more microprocessors DSPs, one or more FPGAs, or a combination of at least two of the integrated circuit forms. Alternatively, the foregoing implementations may be combined.

Specifically, functions/implementation processes of the transceiver unit 610 and the processing unit 620 in FIG. 6 may be implemented by the processor 710 in the communication apparatus 700 shown in FIG. 7 by invoking computer-executable instructions stored in the memory 720. Alternatively, functions/implementation processes of the processing unit 620 in FIG. 6 may be implemented by the processor 710 in the communication apparatus 700 shown in FIG. 7 by invoking computer-executable instructions stored in the memory 720, and functions/implementation processes of the transceiver unit 610 in FIG. 6 may be implemented by the interface 730 in the communication apparatus 700 shown in FIG. 7. For example, the function/implementation process of the transceiver unit 610 may be implemented by the processor by invoking program instructions in the memory to drive the interface 730.

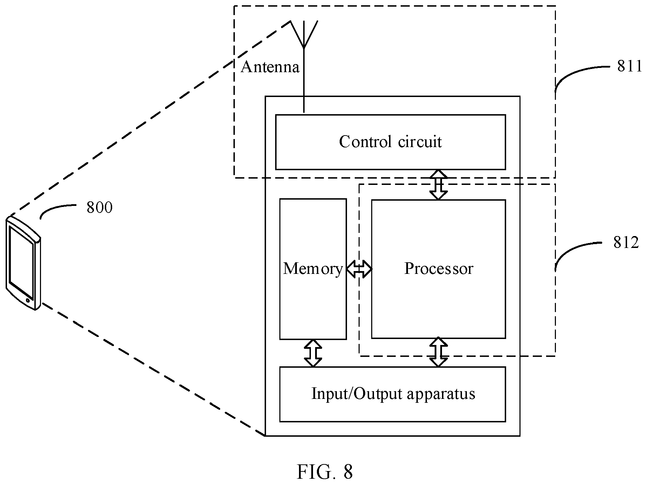

FIG. 8 is a schematic diagram of a structure of a terminal device. For ease of description, FIG. 8 shows only main components of the terminal device. As shown in FIG. 8, the terminal device 800 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send the radio frequency signal in a form of an electromagnetic wave. The input/output apparatus, such as a touchscreen, a display, or a keyboard, is mainly configured to: receive data input by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs the baseband signal to the radio frequency circuit. The radio frequency circuit processes the baseband signal to obtain the radio frequency signal, and sends the radio frequency signal to the outside in an electromagnetic wave form by using the antenna. When data is sent to the terminal device, the radio frequency circuit receives the radio frequency signal by using the antenna, further converts the radio frequency signal into the baseband signal, and outputs the baseband signal to the processor. The processor converts the baseband signal into data, and processes the data.

For ease of description, FIG. 8 shows only one memory and one processor. In an actual terminal device, there may be a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 8 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have sending and receiving functions may be considered as a transceiver unit 811 of the terminal device 800, and the processor having a processing function may be considered as a processing unit 812 of the terminal device 800. As shown in FIG. 8, the terminal device 800 includes the transceiver unit 811 and the processing unit 812. The transceiver unit may also be referred to as a transceiver machine, a transceiver, a transceiver apparatus, or the like. Optionally, a component that is in the transceiver unit 811 and that is configured to implement a receiving function may be considered as a receiving unit, and a component that is in the transceiver unit 811 and that is configured to implement a sending function may be considered as a sending unit. In other words, the transceiver unit 811 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be in one geographical position, or may be distributed in a plurality of geographical positions.

A person of ordinary skill in the art may understand that various numbers such as "first" and "second" in this application are merely used for differentiation for ease of description, and are not used to limit the scope of embodiments of this application or represent a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. The term "a plurality of" means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of the present invention.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

All or a part of the foregoing embodiments may be implemented by using software, hardware, firmware, or any combination thereof. When the embodiments are implemented by software, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid-state drive, SSD)), or the like.

The various illustrative logical units and circuits in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a random access memory (Random Access Memory, RAM), a flash memory, a read-only memory (Read-Only Memory, ROM), an EPROM memory, an EEPROM memory, a register, a hard disk, a removable magnetic disk, a CD-ROM, or a storage medium of any other form in the art. For example, the storage medium may connect to a processor, so that the processor may read information from the storage medium and write information to the storage medium. Alternatively, the storage medium may be integrated into a processor. The processor and the storage medium may be disposed in the ASIC. These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

In one or more example designs, the functions described in this application may be implemented by using hardware, software, firmware, or any combination thereof. If the present invention is implemented by software, these functions may be stored in a computer-readable medium or are transmitted to the computer-readable medium in a form of one or more instructions or code. The computer-readable medium is either a computer storage medium or a communication medium that enables a computer program to move from one place to another. The storage medium may be an available medium that may be accessed by any general-purpose or special computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code, where the program code is in a form of instructions or a data structure or in a form that may be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disk (disk) and the disc (disc) include a compact disc, a laser disc, an optical disc, a digital versatile disc (English: Digital Versatile Disc, DVD for short), a floppy disk, and a Blu-ray disc. The disc usually copies data in a magnetic manner, and the disk usually optically copies data in a laser manner. The foregoing combination may also be included in the computer-readable medium.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application.

According to the foregoing description of this specification in this application, technologies in the art may use or implement the content of this application.

Although this application is described with reference to specific features and embodiments thereof, it is clear that various modifications and combinations may be made to them without departing from the scope of this application Correspondingly, the specification and accompanying drawings are merely example description of this application defined by the appended claims.

It is clearly that, a person skilled in the art can make various modifications and variations to this application without departing from the scope of this application. This application is intended to cover these modifications and variations of this application provided that they fall within the scope of protection defined by the following claims.

## Claims

1. A user plane positioning method, comprising:
sending (301, 504), by a location management network element, a session create request to a session management network element, the session create request being used to request to establish a session, wherein the session refers to a user plane connection between a terminal device and the location management network element;
sending (302, 505), by the session management network element, indication information to an access network device, wherein the indication information indicates that the session is related to a positioning service,
sending (303, 506), by the location management network element, a first message to the access network device directly by using the session, wherein the first message is used to request location information of the terminal device;
parsing (507), by the access network device, the first message based on the indication information;
determining (508), by the access network device, the location information of the terminal device; receiving (304, 509),
by the location management network element, the location information of the terminal device from the access network device by using the session; and
determining (305, 510), by the location management network element, a location of the terminal device based on the location information of the terminal device.

2. The method according to claim 1, wherein the location information comprises a positioning reference signal and/or a sounding reference signal, and the location information is used to calculate a location of the terminal device.

3. The method according to claim 1 or 2, wherein a positioning protocol between the location management network element and the access network device is used for the first message.

4. The method according to claim 3, wherein the positioning protocol is a New Radio Positioning Protocol A, NRPPa.

5. The method according to any one of claims 1 to 4, wherein the first message comprises a correlation identifier of the terminal device and information indicating the positioning method.

6. The method according to claim 5, wherein determining (508) the location information of the terminal device comprises measuring, by the access network device, a radio signal sent by the terminal device.

7. A communication apparatus (800), comprising:
a processor (812), wherein a memory is coupled to the processor (812), the memory is configured to store program instructions, and the processor (812) is configured to execute the program instructions to implement the method according to any one of claims 1 to 6.

8. A communication system, comprising an access network device, a session management network element, and a location management network element configured to perform the method according to any one of claims 1 to 6.

## Patentansprüche

1. Positionierungsverfahren durch Benutzerebene, umfassend:
Senden (301, 504),
einer Sitzungserstellungsanforderung an ein Sitzungsverwaltungs-Netzwerkelement durch ein Standortverwaltungs-Netzwerkelement, wobei die Sitzungserstellungsanforderung verwendet wird, um die Herstellung einer Sitzung anzufordern, wobei sich die Sitzung auf eine Benutzerebenenverbindung zwischen einer Endgerätvorrichtung und dem Standortverwaltungs-Netzwerkelement bezieht;
Senden (302, 505),
von Angabeinformationen an eine Zugangsnetzwerkvorrichtung durch das Sitzungsverwaltungs-Netzwerkelement, wobei die Angabeinformationen angeben, dass die Sitzung einen Positionierungsdienst betrifft,
Senden (303, 506),
einer ersten Nachricht an die Zugangsnetzwerkvorrichtung direkt unter Verwendung der Sitzung durch das Standortverwaltungs-Netzwerkelement, wobei die erste Nachricht verwendet wird, um Standortinformationen der Endgerätevorrichtung anzufordern;
Parsen (507) der ersten Nachricht basierend auf den Angabeinformationen durch die Zugangsnetzwerkvorrichtung;
Bestimmen (508) der Standortinformationen der Endgerätvorrichtung durch die Zugangsnetzwerkvorrichtung;
Empfangen (304, 509),
der Standortinformationen der Endgerätvorrichtung von der Zugangsnetzwerkvorrichtung durch das Standortverwaltungs-Netzwerkelement unter Verwendung der Sitzung; und
Bestimmen (305, 510),
eines Standorts der Endgerätvorrichtung basierend auf den Standortinformationen der Endgerätvorrichtung durch das Standortverwaltungs-Netzwerkelement.

2. Verfahren gemäß Anspruch 1, wobei die Standortinformationen ein Positionierungsreferenzsignal und/oder ein Lotungsreferenzsignal umfassen und die Standortinformationen verwendet werden, um einen Standort der Endgerätvorrichtung zu berechnen.

3. Verfahren gemäß Anspruch 1 oder 2, wobei ein Positionierungsprotokoll zwischen dem Standortverwaltungs-Netzwerkelement und der Zugangsnetzwerkvorrichtung für die erste Nachricht verwendet wird.

4. Verfahren gemäß Anspruch 3, wobei das Positionierungsprotokoll ein neues Funkpositionierungsprotokoll A (New Radio Positioning Protocol A, NRPPa) ist.

5. Verfahren gemäß einem der Ansprüche 1 bis 4, wobei die erste Nachricht einen Korrelationsbezeichner der Endgerätvorrichtung und Informationen umfasst, die das Positionierungsverfahren angeben.

6. Verfahren gemäß Anspruch 5, wobei das Bestimmen (508) der Standortinformationen der Endgerätvorrichtung Messen eines durch die Endgerätvorrichtung gesendeten Funksignals durch die Zugangsnetzwerkvorrichtung umfasst.

7. Kommunikationsvorrichtung (800), umfassend:
einen Prozessor (812), wobei ein Speicher mit dem Prozessor (812) gekoppelt ist, der Speicher dazu konfiguriert ist, Programmanweisungen zu speichern, und der Prozessor (812) dazu konfiguriert ist, die Programmanweisungen auszuführen, um das Verfahren gemäß einem der Ansprüche 1 bis 6 umzusetzen.

8. Kommunikationssystem, umfassend eine Zugangsnetzwerkvorrichtung, ein Sitzungsverwaltungs-Netzwerkelement und ein Standortverwaltungs-Netzwerkelement, das dazu konfiguriert ist, das Verfahren gemäß einem der Ansprüche 1 bis 6 durchzuführen.

## Revendications

1. Procédé de positionnement de plan utilisateur, comprenant :
l'envoi (301, 504), par un élément de réseau de gestion d'emplacement, d'une requête de création de session à un élément de réseau de gestion de session, la requête de création de session étant utilisée pour demander l'établissement d'une session, dans lequel la session fait référence à une connexion de plan utilisateur entre un dispositif terminal et l'élément de réseau de gestion d'emplacement ;
l'envoi (302, 505), par l'élément de réseau de gestion de session, d'informations d'indication à un dispositif de réseau d'accès, dans lequel les informations d'indication indiquent que la session est liée à un service de positionnement,
l'envoi (303, 506), par l'élément de réseau de gestion d'emplacement, d'un premier message au dispositif de réseau d'accès directement en utilisant la session, dans lequel le premier message est utilisé pour demander des informations d'emplacement du dispositif terminal ;
l'analyse (507), par le dispositif de réseau d'accès, du premier message sur la base des informations d'indication ;
la détermination (508), par le dispositif de réseau d'accès, des informations d'emplacement du dispositif terminal ;
la réception (304, 509), par l'élément de réseau de gestion d'emplacement, des informations d'emplacement du dispositif terminal à partir du dispositif de réseau d'accès en utilisant la session ; et
la détermination (305, 510), par l'élément de réseau de gestion d'emplacement, d'un emplacement du dispositif terminal sur la base des informations d'emplacement du dispositif terminal.

2. Procédé selon la revendication 1, dans lequel les informations d'emplacement comprennent un signal de référence de positionnement et/ou un signal de référence de sondage, et les informations d'emplacement sont utilisées pour calculer un emplacement du dispositif terminal.

3. Procédé selon la revendication 1 ou 2, dans lequel un protocole de positionnement entre l'élément de réseau de gestion d'emplacement et le dispositif de réseau d'accès est utilisé pour le premier message.

4. Procédé selon la revendication 3, dans lequel le protocole de positionnement est un nouveau protocole de positionnement radio A, NRPPa.

5. Procédé selon l'une quelconque des revendications 1 à 4, dans lequel le premier message comprend un identifiant de corrélation du dispositif terminal et des informations indiquant le procédé de positionnement.

6. Procédé selon la revendication 5, dans lequel la détermination (508) des informations d'emplacement du dispositif terminal comprend la mesure, par le dispositif de réseau d'accès, d'un signal radio envoyé par le dispositif terminal.

7. Appareil de communication (800), comprenant :
un processeur (812), dans lequel une mémoire est couplée au processeur (812), la mémoire est configurée pour stocker des instructions de programme, et le processeur (812) est configuré pour exécuter les instructions de programme pour mettre en œuvre le procédé selon l'une quelconque des revendications 1 à 6.

8. Système de communication comprenant un dispositif de réseau d'accès, un élément de réseau de gestion de session et un élément de réseau de gestion d'emplacement configurés pour réaliser le procédé selon l'une quelconque des revendications 1 à 6.
